# EUROPEAN PATENT SPECIFICATION

(11) **EP 3 458 316 B1**
(45) Date of publication and mention of the grant of the patent: **04.01.2023**
(21) Application number: 17799778.0
(22) Date of filing: 18.05.2017
(51) Int. Cl.: B60T 3/00, B60R 25/09, B64F 1/16, B65G 69/00

(54) **A DEVICE FOR IMMOBILIZING A WHEELED VEHICLE**
VORRICHTUNG FÜR IMMOBILISIERUNG EINES BERÄDERTEN FAHRZEUGS
DISPOSITIF D'IMMOBILISATION DE VÉHICULE À ROUES

(30) Priority: 18.05.2016 SE 1650672
(43) Date of publication of application: 27.03.2019
(73) Proprietor: Vinnicombe, Timothy Richard, 791 38 Falun (SE)
(72) Inventor: Vinnicombe, Timothy Richard, 791 38 Falun (SE)
(74) Representative: Bjerkén Hynell KB
(86) International application number: PCT/SE2017/050524
(87) International publication number: WO 2017/200475

(56) References cited:
- EP-A1- 0 384 994
- FR-A1- 2 676 685
- GB-A- 721 461
- GB-A- 2 448 823
- US-A- 866 474
- US-A- 2 326 684
- US-A- 3 583 723
- US-A- 3 720 422
- US-A- 4 649 724
- US-A- 4 653 967
- US-A- 4 687 070
- US-A- 5 832 759
- US-A1- 2005 226 705
- US-A1- 2005 284 707

## Description

### TECHNICAL FIELD OF THE INVENTION

The present invention relates to a device for immobilizing a wheeled vehicle, hereinafter called chock device, comprising a first chock member configured to be arranged on a first side of, in front of or behind, a wheel of a said vehicle in a state of use of the device, a second chock member configured to be arranged on a second opposite side of said wheel in said state of use, and an arrangement interconnecting said first and second chock members and controllable to cause relative movement of these towards and from each other so as to move the chock members between on one hand a locking position in which the first and second chock members are wedged between the wheel and a ground on which the wheel rests on said first and second sides of the wheel, respectively, so as to prevent the wheel from moving, and on the other hand a releasing position in which at least one of the chock members is moved away from and located at a distance to the wheel so as to allow the wheel to move.

The invention relates to such a chock device of any conceivable type, which can be used at an airport to immobilize airplanes as one example, but such a chock device used at a loading area of a warehouse may be mentioned as a typical example without restricting the invention thereto.

Such a chock device is used for immobilizing a vehicle so as to prevent accidental or unauthorized movement thereof. At a loading area of a warehouse such a chock device is used to immobilize a truck parked at for instance a loading dock by locking a wheel thereof while the truck is being loaded or unloaded. The chock device is here providing additional safety for the staff working at the loading dock, by acting as a complementary safety arrangement in addition to the parking brakes of the truck.

### BACKGROUND ART

Two different chock devices of the type described in the introduction are previously known through the document US 2007/0050999 A1.

One of them, taken as an example, has a fixed chock and a movable chock each arranged at respective supports fixed to respective side parts of a base frame (see Fig. 7). The support of the movable chock is connected to a driving device configured to cause this chock to move towards and away from the fixed chock, for obtaining a wheel locking position and a wheel releasing position, respectively. To obtain the wheel locking position and by that immobilize a vehicle the chock device is positioned at a wheel of the vehicle so that the two chocks are located on respective sides thereof. The driving device is then operated by a handle to move the movable chock towards the fixed chock located at the opposite side of the wheel. When the movable chock comes into contact with the wheel the driving device will continue to cause this chock to move relative to the fixed chock towards the latter which causes the fixed chock to be drawn against the wheel until both chocks are pressed to the wheel so as to prevent this from moving.

Two further documents showing devices with a similar structure are US 3 720 422 A and US 3 583 723 A.

Two important characteristics by chock devices of this type is steady arrangement of the chocks, or chock members, in the wheel locking position so that the wheel is properly locked in this position, and fast and easy shifting from the wheel releasing position to the wheel locking position and vice versa, so that only little time have to be spent to immobilize and release a vehicle.

### SUMMARY OF THE INVENTION

The object of the present invention is to provide a device for immobilizing a wheeled vehicle of the type defined in the introduction being improved in at least some aspect with respect to such devices already known, through for example said document.

This object is according to the invention obtained by providing such a device, which is characterized in that it further comprises means configured to rest on said ground in said state of use of the device and hold the chock members at a distance above the ground in a rest position and to allow the chock members to move to the ground while storing potential energy by these means when the chock members are moved towards each other by control of said arrangement and by that pushed against the wheel and guided along this towards the ground for obtaining said locking position of the chock members, and that these means are configured to automatically return to said rest position by releasing the potential energy stored when the chock members are moved away from each other and from said locking position. Said means provide steady arrangement of the chock members in the locking position by allowing these to move to the ground so as to be firmly wedged between the wheel and the ground in said locking position. Furthermore, the device is fastly removed from the wheel of the vehicle by these means causing the chocking members to automatically return to a position in which they are located at a distance above the ground when the chock members are moved away from each other and from said locking position.

According to an embodiment of the invention said means comprises at least one member configured to rest on the ground and at least one spring member, preferably a compression spring, by which said member is suspended with respect to the first and second chock members. Such an arrangement is especially suitable for providing the desirable function of said means.

According to another embodiment of the invention said means comprises at least two members configured to rest on the ground, and said at least two members are roll members, preferably wheels, configured to rest on the ground in said state of use so that the chock members or the entire device is rollable on the ground by the roll members in said state of use. Such roll members enable easy movement of the chock members or the entire device, so that the chock members may quickly be arranged at and removed from the wheel of a said vehicle.

According to another embodiment of the invention said arrangement comprises a drive cylinder and control means by which the drive cylinder is controllable to move the first and second chock members towards and away from each other between said locking and releasing positions. A drive cylinder is a suitable means for causing relative movement of the chock members towards and away from each other.

According to another embodiment of the invention said drive cylinder is a hydraulic cylinder. A hydraulic cylinder provide easy and reliable relative movement of the chock members.

According to another embodiment of the invention the device comprises a frame structure comprising two essentially L-shaped frame parts each constituted by a first beam and a second beam connected to the first beam and extending in a direction perpendicular or at least substantially perpendicular to the longitudinal extension of the first beam, wherein the first beams of the two frame parts are interconnected in said state of use in such a way that a relative movement of these is allowed only in the direction of their longitudinal extension in said state of use and that the second beams extend in parallel or at least substantially parallel with each other in said state, one of said second beams is provided with the first chock member and the other second beam is provided with the second chock member, and the arrangement is controllable to cause relative movement of the first beams in the direction of their longitudinal extension and by that move the second beams and the first and second chock members towards and away from each other. Such a frame structure provide a durable device.

According to another embodiment of the invention one of said first beams has a recess at an end face thereof and the other first beam has an end portion configured to project into the recess in said state of use, and said cylinder is interconnecting said first beams by being secured, on one side, to the first beam having the recess in the recess thereof and, on the other side, to the first beam having the end portion configured to project into the recess, so that the cylinder is controllable to cause relative movement of the first beams by moving said projecting end further into and out of the recess, respectively. Such a connection between said first beams provide a stable frame structure and by that a reliable device.

According to another embodiment of the invention the device further comprises an alarm system comprising a setting arrangement configured controllable to set the alarm system in an on-mode by providing at least one predetermined threshold value for a parameter associated with the mutual position of the chock members to a processor unit, a sensor arrangement configured to measure an actual value of said parameter and to provide information of the actual value to a processor unit, a processor unit configured to receive information of the at least one threshold value for and the actual value of said parameter and based on this information determine if the actual value is on an acceptable side of the at least one threshold value or not, and a signal arrangement, wherein the processor unit is configured to activate the signal arrangement to transmit an alarm signal if the actual value is not on the acceptable side of the at least one threshold value for said parameter in said on-mode. Such an alarm system provides a safe work environment for the workers of the area in which the device is used by minimizing the risk that the chock members will accidentally be removed from the locking position.

According to another embodiment of the invention the setting arrangement is configured to provide two threshold values to the processor unit, wherein one of said threshold values is a lower threshold value and the other is an upper threshold value, and the processor unit is configured to activate the signal arrangement to transmit an alarm signal if the actual value is outside the range defined by the lower and upper threshold values. Such an alarm system ensures a proper arrangement of the chock members in the locking position and provides by that a reliable device.

According to another embodiment of the invention said parameter associated with the mutual position of the chock members relates to the force with which the chock members are pressed against the wheel by the drive cylinder. The force with which the chock members are pressed against the wheel by the drive cylinder is suitable to use as said parameter for providing a reliable alarm system.

According to another embodiment of the invention said parameter associated with the mutual position of the chock members relates to the pressure of hydraulic fluid in the hydraulic cylinder. The pressure of hydraulic fluid in the hydraulic cylinder is especially suitable to use as said parameter.

According to another embodiment of the invention the setting arrangement is configured to provide at least a lower threshold value to the processor unit, which lower threshold value is preferably 30 bar, and the processor unit is configured to activate the signal arrangement if the actual value is less than this lower threshold value in said on-mode. Such a lower threshold value ensures a steady arrangement of the chock members in the locking position. According to another embodiment of the invention the setting arrangement comprises a mobile key element configured to be positioned on the device in an off-mode of the alarm system and means configured to sense if the key element is positioned on the device and the setting arrangement is configured to set the alarm system in an on-mode when it is sensed that the key element is removed from its position on the device and in an off-mode when it is sensed that the key element is returned to said position. Such a setting arrangement of the alarm system ensures that the device is not removed from the wheel before the vehicle is ready to drive away, as the key element may be handed over to a person responsible for loading a truck, as an example, and is returned to a person responsible for removing the device from the wheel only after the loading is complete.

According to another embodiment of the invention the signal arrangement is configured to emit an alarm signal comprising an audio-signal. Such an alarm system ensures that the driver of the vehicle will be aware of the alarm signal if trying to move the vehicle before the alarm system is set in the off-mode.

According to another embodiment of the invention said parameter associated with the mutual position of the chock members relates to the distance between two mutually movable points on the device, each of which is fixedly arranged with respect to a respective chock member.

According to another embodiment of the invention the device comprises a grip element configured to be gripped by an operator for moving the device to and away from a wheel of a said vehicle. According to another embodiment of the invention said first and second chock members each has a substantially triangular shape and are arranged aligned with and opposing each other.

According to another embodiment of the invention the signal arrangement is configured to emit an alarm signal comprising a visual signal.

According to another embodiment of the invention said means comprises at least two spring members, preferably compression springs, by each of which a respective member configured to rest on the ground is suspended with respect to a respective chock member.

According to another embodiment of the invention said lower and upper threshold values are in the range of 25 bar to 29 bar and 31 bar to 35 bar, preferably 28 bar and 32 bar, respectively.

The invention also relates to use of a device for immobilizing a vehicle according to the independent use claim.

Further advantages as well as advantageous features of the invention will appear from the following description of an embodiment of the invention.

### BRIEF DESCRIPTION OF THE DRAWINGS

With reference to the appended drawings, below follows a specific description of an embodiment of the invention cited as an example.

In the drawings:
- Fig. 1: is a perspective view of a device according to an embodiment of the invention,
- Fig. 2: is a partly sectional side-elevation view of the device of Fig. 1,
- Fig. 3: is a partly sectional simplified side-elevation view of the first and second chock members of the device of Fig. 1 in a releasing position and moving towards a wheel of a vehicle and the locking position,
- Fig. 4: is a view corresponding to Fig. 3 showing the chock members being pushed against the wheel and guided along this towards the ground,
- Fig. 5: is a view corresponding to Fig. 3 showing the chock members in the locking position, and
- Fig. 6: is an enlarged view of the grip arrangement of the device of Fig. 1 and of components of the alarm system.

### DETAILED DESCRIPTION OF AN EMBODIMENT OF THE INVENTION

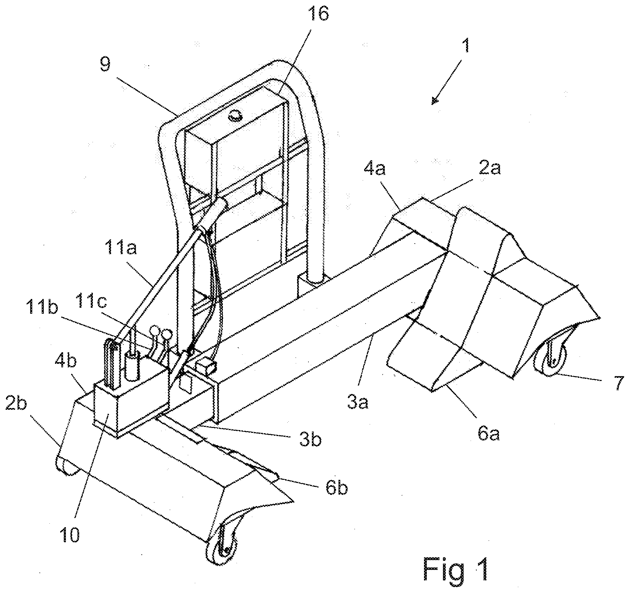

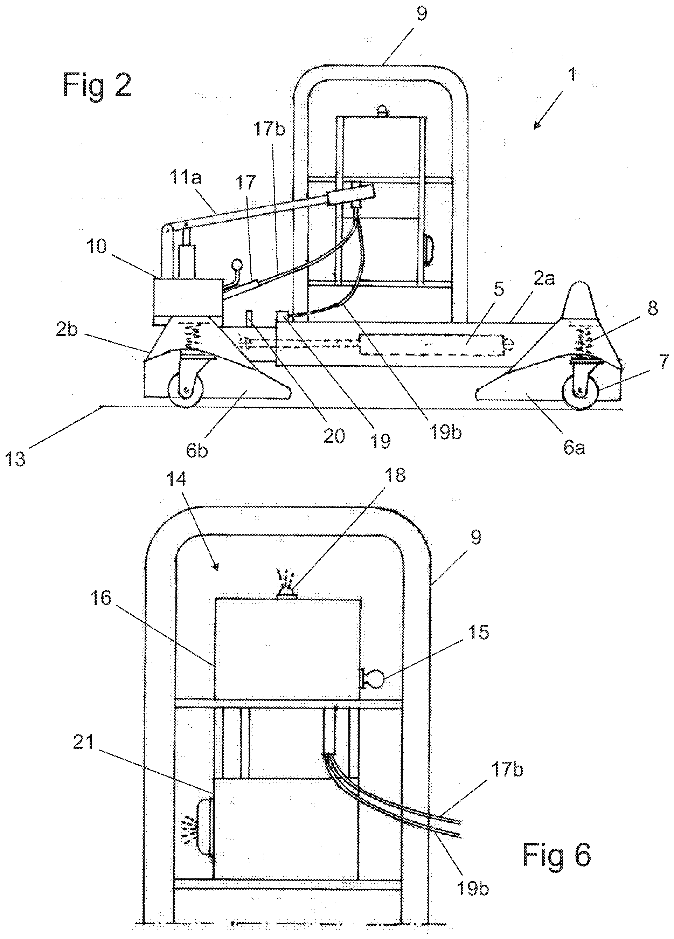

A device for immobilizing a wheeled vehicle, hereinafter called chock device, according to an embodiment of the invention is illustrated in the appended figures 1-6 and will hereinafter be described while at the same time making reference to all these figures.

The chock device 1 comprises a frame structure comprising two essentially L-shaped frame parts 2a, 2b each constituted by a hollow rectangular first steel beam 3a, 3b with an opening at an end face thereof and a second beam 4a, 4b connected to the first beam and extending in a direction perpendicular or at least substantially perpendicular to the longitudinal extension of the first beam. One 3b of the first beams has an outer circumference which is smaller than the inner circumference of the inner space and the opening thereto of the other first beam 3a, which first mentioned beam 3b has an end portion projecting into the opening of the other beam 3a when the first beams are interconnected, so that a relative movement of the first beams is possible only in the direction of their longitudinal extension and that the second beams 4a, 4b extend in parallel or at least substantially parallel with each other.

The first beams 3a, 3b are interconnected by a drive cylinder, in the form of a hydraulic cylinder 5, which is secured, on one side, at a wall inside one of said first beams and, on the other side, at a wall inside the other first beam, so that the cylinder may cause relative movement of the first beams by moving said projecting end further into and out of the inner space, respectively. It is also possible to use another type of drive cylinder, such as a pneumatic cylinder or the like.

One 4a of said second beams is provided with a first chock member 6a and the other second beam 4b is provided with a second chock member 6b. The chock members may be arranged on the second beams be welding or screwing the chock members thereto, or may be formed in one piece with the respective second beams.

Each of the second beams is further provided with means comprising two wheels 7 configured to rest on a ground 13 and spring members, in the form of compression springs 8, by which the wheels are suspended with respect to the respective chock member by the compression springs interconnecting the wheels to the respective second beam 4a, 4b. Said means may further comprise other components such as spacers arranged between the wheels and the compression springs or between the compression springs and the second beams.

The chock device 1 further comprises a grip element 9 in the form of an essentially U-shaped bar secured on the two end portions thereof at the frame structure, which element is configured to be gripped by an operator of the chock device, such as a person of the staff of a loading area of a warehouse, for moving the chock device by rolling it by the wheels 7, for instance to and away from a wheel of a truck. The device 1 could also be movably fastened to for instance a loading dock by a steel beam or other fastening means.

The chock device 1 also comprises components necessary for the function of the hydraulic cylinder 5, such as a pump arrangement 10 and control means 11a, 11b, 11c for controlling the action of the hydraulic cylinder. The pump arrangement 10 is here a manually operated pump and the control means comprises a pump lever 11a by which the pump is operated, a lever 11b for setting the drive direction of the hydraulic cylinder 5 and a lever 11c for controlling the flow of hydraulic fluid to the cylinder. The pump arrangement 10 may also be an automatically operated pump and the control means may for instance comprise buttons on a control panel by which the pump and by that the hydraulic cylinder is operated. The function of the hydraulics of the chock device 1 is well known in the art and will therefore not be further described in this invention

The first and second chock members 6a, 6b are configured to be arranged in front of and behind a wheel 12 of a vehicle, respectively, in a state of use of the chock device 1. An arrangement comprising the hydraulic cylinder 5 and the control means 11a, 11b, 11c is controllable to cause relative movement of the first beams 3a, 3b in the direction of their longitudinal extension by means of the hydraulic cylinder and by that move the second beams 4a, 4b and the first and second chock members 6a, 6b towards and away from each other.

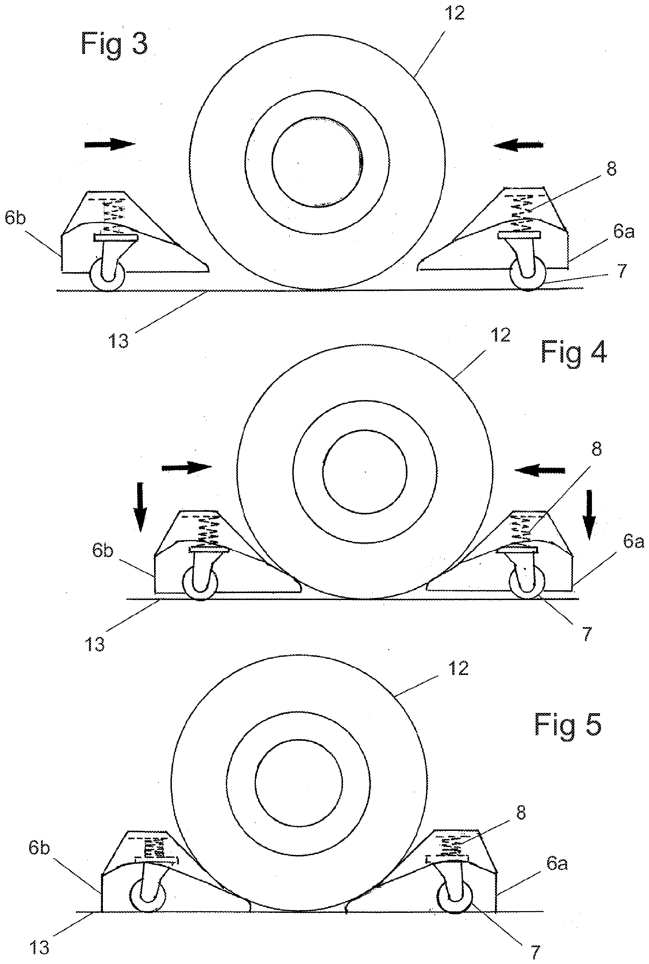

The chock members 6a, 6b are in this way movable between a locking position (see Fig. 5) in which the first and second chock members are wedged between the wheel 12 and a ground 13 on which the wheel rests in front of and behind the wheel, respectively, so as to prevent the wheel from moving and by that immobilizing the vehicle, and a releasing position (see Fig. 3) in which at least one of the chock members is moved away from and located at a distance to the wheel 12 so as to allow the wheel to move.

The means comprising the wheels 7 and the compression springs 8 hold the chock members 6a, 6b at a distance above the ground 13 in a rest position (see Fig. 3) and allow the chock members to move to the ground while storing potential energy by the compression springs when the chock members are moved towards each other by control of the hydraulic cylinder 5 and by that pushed against the wheel 12 and guided along this towards the ground (see Fig. 4) for obtaining said locking position (see Fig. 5). These means are configured to automatically return to said rest position by releasing the potential energy stored by the compression springs 8 when the chock members 6a, 6b are moved away from each other and from said locking position by control of the hydraulic cylinder 5.

The chock device 1 further comprises an alarm system 14 comprising a setting arrangement which comprises a key element, in the form of a regular key 15, and means configured to sense if the key is positioned in its keyhole on a box 16 accommodating components of the alarm system, by which arrangement the alarm system is switched between an on-mode and an off-mode. The key element could also be another type of key, such as a RFID-tag or the like.

The setting arrangement is configured to set the alarm system 14 in an on-mode when it is sensed that the key 15 is removed from the keyhole, by providing at least one predetermined threshold value for a parameter associated with the mutual position of the chock members 6a, 6b to a processor unit accommodated in said box 16. The processor unit may be for instance an electrical circuit or the like. The parameter preferably relates to the pressure of hydraulic fluid in the hydraulic cylinder 5, but such a parameter could also relate to the distance between two or more mutually movable points on the device, each of which is fixedly arranged with respect to a respective chock member 6a, 6b. This means that a said point may be arranged on a respective frame part 2a, 2b on which a chock member 6a, 6b is arranged, or that each point is arranged on a respective chock member.

The setting arrangement is further configured to set the alarm system 14 in an off-mode when it is sensed that the key 15 is returned to the keyhole, by providing this information to the processor unit so that this stops its determining operation.

The alarm system 14 further comprises a sensor arrangement comprising a pressure sensor 17 coupled between the hydraulics and the processor unit via a cable 17b and configured to measure an actual value of said pressure in the hydraulic cylinder 5 and to provide information of the actual value to the processor unit. The sensor arrangement may also comprise another type of sensor, in the case of another type of drive cylinder than a hydraulic cylinder.

The processor unit is configured to receive information of the at least one threshold value for and the actual value of said pressure and based on this information determine if the actual value is on an acceptable side of the at least one threshold value or not and to activate a signal arrangement to transmit an alarm signal if the actual value is not on the acceptable side of the at least one threshold value. The alarm signal comprises an audio-signal emitted by suitable means (not shown) and a visual signal emitted by a lamp 18 on the box 16. Additionally, the alarm signal may comprise wireless signals configured to activate a warning message in an application program of a mobile phone, as one example.

The lamp 18 is also used to indicate that the chock members 6a, 6b are properly arranged in the locking position, so that when it is sensed by the pressure sensor 17 that the pressure value is above a predetermined threshold value, or within a threshold range, the lamp is activated by the processor unit to light in a specific color indicating that the key 15 may be removed without that the signal arrangement is activated. In combination with or instead of the pressure in the hydraulic cylinder 5 for instance a solenoid or a hand valve lockable with a padlock may be used to secure the chock members in the locking position by locking the cylinder.

The setting arrangement of the alarm system 14 may be configured to provide only one threshold value, or two threshold values or more for a said parameter to the processor unit. Preferably, a lower and an upper threshold value is provided, so that the processor unit activates the signal arrangement if the actual value measured by the sensor arrangement 17 is outside the range defined by the lower and the upper threshold values. The lower threshold value is preferably 30 bar or slightly under 30 bar, such as between 25 bar and 29 bar, and the upper threshold value is preferably 35 bar or slightly under 35 bar, such as between 31 bar and 34 bar. However, the threshold values may vary depending on the use of the chock device 1. The threshold values may for instance be greater if the chock device is to be used to immobilize an airplane at an airport. The threshold values may also be preset in the manufacturing of the chock device, or adjustable during the use thereof.

The alarm system provides additional safety for the staff working in the area where the chock device 1 is used. At a loading dock of a warehouse, as an example, a person of the loading staff sets the alarm system in the on-mode by removing the key 15 after the chock members 6a, 6b are moved to the locking position at a wheel 12 of a truck to be loaded with goods. The key may then be kept by this person who is consequently responsible for controlling that the truck is ready to leave before switching the alarm system back in the off-mode by returning the key to its position in the keyhole.

First of all, the fact that the alarm signal is not activated when the key is removed means that the pressure in the hydraulic cylinder is correct and consequently that the wheel is properly locked by the chock members 6a, 6b. If this pressure is significantly changed by movement of the wheel 12 over one of the chock members or by pushing one of them away from the other, due to a premature drive-away by the truck driver, the alarm signal will be activated and indicating danger to the staff of the loading area and to the driver. Also, the alarm system warns the loading staff if the pressure is lost due to a mechanical or hydraulic failure during loading of the truck, or if someone tries to remove the chock members 6a, 6b from the locking position without having the key 15.

The chock device 1 also comprises a proximity sensor 19 arranged on the end portion of a first beam 3a of the frame structure, and a plate 20 arranged on the other first beam 3b in front of the proximity sensor. The proximity sensor is coupled to the processor unit of the alarm system 14 in the box 16 via a cable 19b. The proximity sensor 19 is configured to measure the distance to the plate 20 and provide this information to the processor unit of the alarm system. This information may constitute an actual value for another parameter associated with the mutual position of the chock members 6a, 6b.

The setting arrangement may then be configured to provide a threshold value for a parameter associated with the mutual position of the chock members 6a, 6b, in the form of an upper threshold value for the distance from the proximity sensor 19 to the plate 20, to the processor unit. The processor unit is then configured to determine if the actual value for this parameter, i.e. the distance to the plate measured by the proximity sensor, is on an acceptable side of the threshold value or not, and to activate the signal arrangement to transmit the alarm signal if the actual value is not on the acceptable side of the threshold value.

The distance between the proximity sensor 19 and the plate 20 may constitute the only parameter used by the alarm system 14, or be used as a complement to the pressure in the hydraulic cylinder 5. This result in a very reliable alarm system 14 and by that a chock device 1 which provide optimal safety for the staff working around the vehicle immobilized by the chock device, as the alarm signal will be activated if the pressure in the hydraulic cylinder 5 is lost or if the chock members 6a, 6b are pushed away from each other.

Needless to say the alarm system 14 also comprises a power supply, such as a stationary or removable battery pack 21, and other electronic components necessary for its function.

Even though the chock device 1 is supposed to immobilize a vehicle, such as a truck or an airplane, it is of course just as suitable to use for immobilizing only a truck trailer, a caravan or the like, i.e. a vehicle without drive means.

The invention is of course not in any way restricted to the embodiment thereof described above, but many possibilities to modifications thereof will be apparent to a person with ordinary skill in the art without departing from the scope of the invention as defined in the appended claims.

The arrangement interconnecting said first and second chock members and controllable to cause relative movement of these towards and from each other is constituted by one or more components directly or indirectly connecting the chock members to each other and having the ability to cause relative movement of the chock members towards and away from each other. Such an arrangement may be constituted by any type of drive cylinder, such as a pneumatic cylinder, directly connected to the two chock members or to parts of the device on which the chock members are arranged, or by manually operated mechanical drive means, such as a screw shaft, as a few examples.

The means configured to rest on said ground in said state of use of the device and hold the chock members at a distance above the ground in a rest position may comprise other components than compression springs and wheels, such as members configured to rest on the ground in the form of ball wheels or skis, and one or more spring members in the form of gas springs or blocks of a foam material.

A spring member is in this invention to be interpreted as a member with the ability to be compressed from its rest state while storing potential energy and is configured to return to the rest state by releasing the potential energy stored.

The word "wheel", for instance in the sentence "the first and second chock members are wedged between the wheel and a ground", is to be considered to also include a tire or similar means, i.e. the chock members may for instance be wedged between a tire of the wheel and the ground.

## Claims

1. A device (1) for immobilizing a wheeled vehicle, comprising:
• a first chock member (6a) configured to be arranged on a first side of, in front of or behind, a wheel (12) of a said vehicle in a state of use of the device (1),
• a second chock member (6b) configured to be arranged on a second opposite side of said wheel (12) in said state of use, and
• an arrangement (5, 11a, 11b, 11c) interconnecting said first and second chock members (6a, 6b) and controllable to cause relative movement of these towards and from each other so as to move the chock members (6a, 6b) between a locking position in which the first and second chock members (6a, 6b) are wedged between the wheel (12) and a ground (13) on which the wheel (12) rests on said first and second sides of the wheel (12), respectively, so as to prevent the wheel (12) from moving, and a releasing position in which at least one of the chock members (6a, 6b) is moved away from and located at a distance to the wheel (12) so as to allow the wheel (12) to move,
***characterized* in that** the device (1) further comprises:
• means (7, 8) configured to rest on said ground (13) in said state of use of the device (1) and hold the chock members (6a, 6b) at a distance above the ground (13) in a rest position and to allow the chock members (6a, 6b) to move to the ground (13) while storing potential energy by these means (7, 8) when the chock members (6a, 6b) are moved towards each other by control of said arrangement (5, 11a, 11b, 11c) and by that pushed against the wheel (12) and guided along this towards the ground (13) for obtaining said locking position of the chock members (6a, 6b), and that these means (7, 8) are configured to automatically return to said rest position by releasing the potential energy stored when the chock members (6a, 6b) are moved away from each other and from said locking position.

2. A device (1) according to claim 1, ***characterized* in that** said means comprises at least one member (7) configured to rest on the ground (13) and at least one spring member (8), preferably a compression spring, by which said member (7) is suspended with respect to the first and second chock members (6a, 6b).

3. A device (1) according to claim 1 or 2, ***characterized* in that** said means comprises at least two members (7) configured to rest on the ground (13), and that said at least two members are roll members (7), preferably wheels, configured to rest on the ground (13) in said state of use so that the chock members (6a, 6b) or the entire device (1) is rollable on the ground (13) by the roll members (7) in said state of use.

4. A device (1) according to any of the claims 1-3, ***characterized* in that** said arrangement comprises a drive cylinder (5) and control means (11a, 11b, 11c) by which the drive cylinder (5) is controllable to move the first and second chock members (6a, 6b) towards and away from each other between said locking and releasing positions.

5. A device (1) according to claim 4, ***characterized* in that** said drive cylinder (5) is a hydraulic cylinder.

6. A device (1) according to any of the preceding claims, ***characterized* in that** the device (1) comprises a frame structure comprising two essentially L-shaped frame parts (2a, 2b) each constituted by a first beam (3a, 3b) and a second beam (4a, 4b) connected to the first beam (3a, 3b) and extending in a direction perpendicular or at least substantially perpendicular to the longitudinal extension of the first beam (3a, 3b), wherein the first beams (3a, 3b) of the two frame parts (2a, 2b) are interconnected in said state of use in such a way that a relative movement of these is allowed only in the direction of their longitudinal extension in said state of use and that the second beams (4a, 4b) extend in parallel or at least substantially parallel with each other in said state, that one of said second beams (4a) is provided with the first chock member (6a) and the other second beam (4b) is provided with the second chock member (6b), and that the arrangement (5, 11a, 11b, 11c) is controllable to cause relative movement of the first beams (3a, 3b) in the direction of their longitudinal extension and by that move the second beams (4a, 4b) and the first and second chock members (6a, 6b) towards and away from each other.

7. A device (1) according to claim 4 or 5 and 6, ***characterized* in that** one of said first beams (3a) has a recess at an end face thereof and the other first beam (3b) has an end portion configured to project into the recess in said state of use, and that said cylinder (5) is interconnecting said first beams (3a, 3b) by being secured, on one side, to the first beam (3a) having the recess in the recess thereof and, on the other side, to the first beam (3b) having the end portion configured to project into the recess, so that the cylinder (5) is controllable to cause relative movement of the first beams (3a, 3b) by moving said projecting end further into and out of the recess, respectively.

8. A device (1) according to any of the preceding claims, ***characterized* in that** the device (1) further comprises an alarm system (14) comprising
• a setting arrangement configured controllable to set the alarm system (14) in an on-mode by providing at least one predetermined threshold value for a parameter associated with the mutual position of the chock members (6a, 6b) to a processor unit,
• a sensor arrangement (17, 19) configured to measure an actual value of said parameter and to provide information of the actual value to a processor unit,
• a processor unit configured to receive information of the at least one threshold value for and the actual value of said parameter and based on this information determine if the actual value is on an acceptable side of the at least one threshold value or not, and
• a signal arrangement (18),
wherein the processor unit is configured to activate the signal arrangement (18) to transmit an alarm signal if the actual value is not on the acceptable side of the at least one threshold value for said parameter in said on-mode.

9. A device (1) according to claim 8, ***characterized* in that** the setting arrangement is configured to provide two threshold values to the processor unit, wherein one of said threshold values is a lower threshold value and the other is an upper threshold value, and that the processor unit is configured to activate the signal arrangement (18) to transmit an alarm signal if the actual value is outside the range defined by the lower and upper threshold values.

10. A device (1) according to claims 4 and 8 or 9, ***characterized* in that** said parameter associated with the mutual position of the chock members (6a, 6b) relates to the force with which the chock members (6a, 6b) are pressed against the wheel (12) by the drive cylinder (5).

11. A device (1) according to claims 5 and 10, ***characterized* in that** said parameter associated with the mutual position of the chock members (6a, 6b) relates to the pressure of hydraulic fluid in the hydraulic cylinder (5).

12. A device (1) according to claim 11, ***characterized* in that** the setting arrangement is configured to provide at least a lower threshold value to the processor unit, which lower threshold value is preferably 30 bar, and that the processor unit is configured to activate the signal arrangement (18) if the actual value is less than this lower threshold value in said on-mode.

13. A device (1) according to any of the claims 8-12, ***characterized* in that** the setting arrangement comprises a mobile key element (15) configured to be positioned on the device (1) in an off-mode of the alarm system (14) and means configured to sense if the key element (15) is positioned on the device (1) and that the setting arrangement is configured to set the alarm system in an on-mode when it is sensed that the key element (15) is removed from its position on the device (1) and in an off-mode when it is sensed that the key element (15) is returned to said position.

14. A device (1) according to any of the claims 8-13, ***characterized* in that** the signal arrangement is configured to emit an alarm signal comprising an audio-signal.

15. Use of the device (1) according to any of the claims 1-14 for immobilizing a wheeled vehicle, such as a car, a truck, or an airplane.

## Patentansprüche

1. Vorrichtung (1) zum Feststellen eines Radfahrzeugs, umfassend:
ein erstes Keilelement (6a), das so konfiguriert ist, dass es in einem Gebrauchszustand der Vorrichtung (1) auf einer ersten Seite vor oder hinter einem Rad (12) des Fahrzeugs angeordnet werden kann,
ein zweites Keilelement (6b), das so konfiguriert ist, dass es auf einer zweiten, gegenüberliegenden Seite des Rades (12) in dem Gebrauchszustand angeordnet werden kann, und
eine Anordnung (5, 11a, 11b, 11c), die das erste und das zweite Keilelement (6a, 6b) miteinander verbindet und steuerbar ist, um eine relative Bewegung dieser aufeinander zu und voneinander weg zu bewirken, um die Keilelemente (6a, 6b) zwischen einer Verriegelungsposition, in der das erste und das zweite Keilelement (6a, 6b) zwischen dem Rad (12) und einem Boden (13), auf dem das Rad (12) auf der ersten bzw. der zweiten Seite des Rades (12) aufliegt, verkeilt sind, um das Rad (12) an einer Bewegung zu hindern, und einer Freigabeposition, in der mindestens eines der Keilelemente (6a, 6b) von dem Rad (12) weg bewegt und in einem Abstand zu diesem angeordnet ist, um eine Bewegung des Rades (12) zu ermöglichen, zu bewegen,
**dadurch gekennzeichnet, dass** die Vorrichtung (1) ferner umfasst:
ein Mittel (7, 8), das so konfiguriert ist, dass es im Gebrauchszustand der Vorrichtung (1) auf dem Boden (13) aufliegt und die Keilelemente (6a, 6b) in einem Abstand über dem Boden (13) in einer Ruheposition hält und ermöglicht, dass sich die Keilelemente (6a, 6b) zum Boden (13) bewegen, während potentielle Energie durch dieses Mittel (7, 8) gespeichert wird, wenn die Keilelemente (6a, 6b) durch die Steuerung der Anordnung (5, 11a, 11b, 11c) aufeinander zu bewegt und dadurch gegen das Rad (12) gedrückt und entlang diesem zum Boden (13) geführt werden, um die Verriegelungsposition der Keilelemente (6a, 6b) zu erhalten, und dass das Mittel (7, 8) so konfiguriert ist, dass es automatisch in die Ruheposition zurückkehrt, indem es die gespeicherte potentielle Energie freigibt, wenn die Keilelemente (6a, 6b) voneinander weg und aus der Verriegelungsposition bewegt werden.

2. Vorrichtung (1) nach Anspruch 1, **dadurch gekennzeichnet, dass** das Mittel mindestens ein Element (7), das so konfiguriert ist, dass es auf dem Boden (13) aufliegt, und mindestens ein Federelement (8), vorzugsweise eine Druckfeder, umfasst, an dem das Element (7) in Bezug auf das erste und zweite Keilelement (6a, 6b) aufgehängt ist.

3. Vorrichtung (1) nach einem der Ansprüche 1 oder 2, **dadurch gekennzeichnet, dass** das Mittel mindestens zwei Elemente (7) umfasst, die so konfiguriert sind, dass sie auf dem Boden (13) aufliegen, und dass die mindestens zwei Elemente Rollenelemente (7), vorzugsweise Räder, sind, die so konfiguriert sind, dass sie in dem Gebrauchszustand auf dem Boden (13) aufliegen, so dass die Keilelemente (6a, 6b) oder die gesamte Vorrichtung (1) in dem Gebrauchszustand durch die Rollenelemente (7) auf dem Boden (13) rollbar ist.

4. Vorrichtung (1) nach einem der Ansprüche 1 bis 3, **dadurch gekennzeichnet, dass** die Anordnung einen Antriebszylinder (5) und ein Steuermittel (11a, 11b, 11c) umfasst, durch das der Antriebszylinder (5) steuerbar ist, um das erste und das zweite Keilelement (6a, 6b) zwischen der Verrieglungs- und Freigabeposition aufeinander zu und voneinander weg zu bewegen.

5. Vorrichtung (1) nach Anspruch 4, **dadurch gekennzeichnet, dass** der Antriebszylinder (5) ein Hydraulikzylinder ist.

6. Vorrichtung (1) nach einem der vorhergehenden Ansprüche, **dadurch gekennzeichnet, dass** die Vorrichtung (1) einen Rahmenaufbau umfasst, der zwei im Wesentlichen L-förmige Rahmenteile (2a, 2b) umfasst, die jeweils durch einen ersten Träger (3a, 3b) und einen zweiten Träger (4a, 4b) gebildet werden, der mit dem ersten Träger (3a, 3b) verbunden ist und sich in einer Richtung senkrecht oder zumindest im Wesentlichen senkrecht zur Längserstreckung des ersten Trägers (3a, 3b) erstreckt, wobei die ersten Träger (3a, 3b) der beiden Rahmenteile (2a, 2b) in dem Gebrauchszustand so miteinander verbunden sind, dass eine Relativbewegung dieser nur in der Richtung ihrer Längserstreckung in dem Gebrauchszustand erlaubt ist, und dass die zweiten Träger (4a, 4b) sich in diesem Zustand parallel oder zumindest im Wesentlichen parallel zueinander erstrecken, dass einer der zweiten Träger (4a) mit dem ersten Keilelement (6a) und der andere zweite Träger (4b) mit dem zweiten Keilelement (6b) versehen ist, und dass die Anordnung (5, 11a, 11b, 11c) steuerbar ist, um eine relative Bewegung der ersten Träger (3a, 3b) in der Richtung ihrer Längserstreckung zu bewirken und dadurch die zweiten Träger (4a, 4b) und die ersten und zweiten Keilelemente (6a, 6b) aufeinander zu und voneinander weg zu bewegen.

7. Vorrichtung (1) nach einem der Ansprüche 4 oder 5 und 6, **dadurch gekennzeichnet, dass** einer der ersten Träger (3a) an einer seiner Endflächen eine Ausnehmung aufweist und der andere erste Träger (3b) einen Endabschnitt aufweist, der so konfiguriert ist, dass er im Gebrauchszustand in die Ausnehmung hineinragt, und dass der Zylinder (5) die ersten Träger (3a, 3b) miteinander verbindet, indem er auf einer Seite an dem ersten Träger (3a), der die Ausnehmung aufweist, in der Ausnehmung desselben und auf der anderen Seite an dem ersten Träger (3b), der den Endabschnitt aufweist, der so konfiguriert ist, dass er in die Ausnehmung hineinragt, befestigt ist, so dass der Zylinder (5) steuerbar ist, um eine relative Bewegung der ersten Träger (3a, 3b) zu bewirken, indem das vorstehende Ende weiter in die Ausnehmung hinein bzw. aus ihr heraus bewegt wird.

8. Vorrichtung (1) nach einem der vorhergehenden Ansprüche, **dadurch gekennzeichnet, dass** die Vorrichtung (1) ferner ein Alarmsystem (14) umfasst, das umfasst:
eine Einstellanordnung, die so konfiguriert ist, dass sie steuerbar ist, um das Alarmsystem (14) in einen Einschaltmodus zu versetzen, indem sie mindestens einen vorbestimmten Schwellenwert für einen Parameter, der der gegenseitigen Position der Keilelemente (6a, 6b) zugeordnet ist, an eine Prozessoreinheit liefert,
eine Sensoranordnung (17, 19), die so konfiguriert ist, dass sie einen Istwert des Parameters misst und einer Prozessoreinheit Informationen über den Istwert liefert,
eine Prozessoreinheit, die so konfiguriert ist, dass sie Informationen über den mindestens einen Schwellenwert für und den tatsächlichen Wert des Parameters empfängt und auf der Grundlage dieser Informationen bestimmt, ob der tatsächliche Wert auf einer akzeptablen Seite des mindestens einen Schwellenwerts liegt oder nicht, und
eine Signalanordnung (18),
wobei die Prozessoreinheit so konfiguriert ist, dass sie die Signalanordnung (18) aktiviert, um ein Alarmsignal zu senden, wenn der tatsächliche Wert nicht auf der akzeptablen Seite des mindestens einen Schwellenwerts für den Parameter im Ein-Zustand liegt.

9. Vorrichtung (1) nach Anspruch 8, **dadurch gekennzeichnet, dass** die Einstellanordnung so ausgestaltet ist, dass sie der Prozessoreinheit zwei Schwellenwerte zur Verfügung stellt, wobei einer der Schwellenwerte ein unterer Schwellenwert und der andere ein oberer Schwellenwert ist, und dass die Prozessoreinheit so ausgestaltet ist, dass sie die Signalanordnung (18) aktiviert, um ein Alarmsignal zu senden, wenn der Istwert außerhalb des durch den unteren und den oberen Schwellenwert definierten Bereichs liegt.

10. Vorrichtung (1) nach einem der Ansprüche 4 und 8 oder 9, **dadurch gekennzeichnet, dass** der der gegenseitigen Position der Keilelemente (6a, 6b) zugeordnete Parameter sich auf die Kraft bezieht, mit der die Keilelemente (6a, 6b) durch den Antriebszylinder (5) gegen das Rad (12) gedrückt werden.

11. Vorrichtung (1) nach einem der Ansprüche 5 und 10, **dadurch gekennzeichnet, dass** der der gegenseitigen Position der Keilelemente (6a, 6b) zugeordnete Parameter sich auf den Druck des Hydraulikfluids im Hydraulikzylinder (5) bezieht.

12. Vorrichtung (1) nach Anspruch 11, **dadurch gekennzeichnet, dass** die Einstellanordnung dazu ausgebildet ist, der Prozessoreinheit mindestens einen unteren Schwellenwert zur Verfügung zu stellen, wobei der untere Schwellenwert vorzugsweise 30 bar beträgt, und dass die Prozessoreinheit dazu ausgebildet ist, die Signalanordnung (18) zu aktivieren, wenn der Istwert im Ein-Zustand kleiner als dieser untere Schwellenwert ist.

13. Vorrichtung (1) nach einem der Ansprüche 8 bis 12, **dadurch gekennzeichnet, dass** die Einstellanordnung ein bewegliches Schlüsselelement (15), das so konfiguriert ist, dass es in einem Aus-Zustand des Alarmsystems (14) auf der Vorrichtung (1) positioniert werden kann, sowie ein Mittel umfasst, das so konfiguriert ist, dass es erfasst, ob das Schlüsselelement (15) auf der Vorrichtung (1) positioniert ist, und dass die Einstellanordnung so konfiguriert ist, dass sie das Alarmsystem in einen Ein-Zustand versetzt, wenn erfasst wird, dass das Schlüsselelement (15) von seiner Position auf der Vorrichtung (1) entfernt wird, und in einen Aus-Zustand versetzt, wenn erfasst wird, dass das Schlüsselelement (15) in die Position zurückgebracht wird.

14. Vorrichtung (1) nach einem der Ansprüche 8-13, **dadurch gekennzeichnet, dass** die Signalanordnung so konfiguriert ist, dass sie ein Alarmsignal ausgibt, das ein Audiosignal umfasst.

15. Verwendung der Vorrichtung (1) nach einem der Ansprüche 1 bis 14 zum Feststellen eines Fahrzeugs mit Rädern, wie z. B. eines Pkw, eines Lkw oder eines Flugzeugs.

## Revendications

1. Dispositif (1) d'immobilisation d'un véhicule à roues, comprenant :
• un premier élément (6a) de calage configuré pour être mis d'un premier côté, en avant ou en arrière, d'une roue (12) du véhicule dans un état d'utilisation du dispositif (1),
• un deuxième élément (6b) de calage configuré pour être d'un deuxième côté opposé de la roue (12) dans l'état d'utilisation, et
• un agencement (5, 11a, 11b, 11c) reliant les premier et deuxième éléments (6a, 6b) de calage et pouvant être commandé pour provoquer leur rapprochement et leur éloignement relatif, de manière à déplacer les éléments (6a, 6b) de calage entre une position de verrouillage, dans laquelle les premier et deuxième éléments (6a, 6b) de calage sont coincés entre la roue (12) et un sol (13) sur lequel la roue (12) repose sur les premier et deuxième côtés de la roue (12) respectivement, de manière à empêcher la roue (12) de se mouvoir, et une position de libération, dans laquelle au moins l'un des éléments (6a, 6b) de calage est éloigné et placé à distance de la roue (12), de manière à permettre à la roue (12) de se mouvoir,
***caractérisé* en ce que** le dispositif (1) comprend en outre :
• des moyens (7, 8) configurés pour reposer sur le sol (13) dans l'état d'utilisation du dispositif (1) et maintenir les éléments (6a, 6b) de calage à distance au-dessus du sol (13) dans une position de repos, et pour permettre aux éléments (6a, 6b) de calage de se déplacer vers le sol (13) tout en accumulant de l'énergie potentielle par ces moyens (7, 8), lorsque les éléments (6a, 6b) de calage sont rapprochés l'un de l'autre par commande de l'agencement (5, 11a, 11b, 11c) et par cela pousser contre la roue (12) et guider le long de celle-ci vers le sol (13) pour obtenir la position de verrouillage des éléments (6a, 6b) de calage, et **en ce que** ces moyens (7, 8) sont configurés pour revenir automatiquement à la position de repos en libérant l'énergie potentielle accumulée, lorsque les éléments (6a, 6b) de calage sont éloignés l'un de l'autre et de la position de verrouillage.

2. Dispositif (1) suivant la revendication 1, ***caractérisé* en ce que** les moyens comprennent au moins un élément (7) configuré pour reposer sur le sol (13) et au moins un élément (8) de ressort, de préférence un ressort de compression, par lequel l'élément (7) est suspendu par rapport au premier et au deuxième éléments (6a, 6b) de calage.

3. Dispositif (1) suivant la revendication 1 ou 2, ***caractérisé* en ce que** les moyens comprennent au moins deux éléments (7) configurés pour reposer sur le sol (13), et **en ce que** les au moins deux éléments sont des éléments (7) de roulement, de préférence des roues, configurés pour reposer sur le sol (13) dans l'état d'utilisation de manière à ce que les éléments (6a, 6b) de calage ou le dispositif (1) tout entier puissent rouler sur le sol (13) par les éléments (7) de roulement dans l'état d'utilisation.

4. Dispositif (1) suivant l'une quelconque des revendications 1 à 3, ***caractérisé* en ce que** l'agencement comprend un vérin (5) d'entraînement et des moyens (11a, 11b, 11c) de commande par lesquels le vérin (5) d'entraînement peut être commandé pour faire se rapprocher et s'éloigner l'un de l'autre les premier et deuxième éléments (6a, 6b) de calage entre les positions de verrouillage et de libération.

5. Dispositif (1) suivant la revendication 4, ***caractérisé* en ce que** le vérin (5) d'entraînement est un vérin hydraulique.

6. Dispositif (1) suivant l'une quelconque des revendications précédentes, ***caractérisé* en ce que** le dispositif (1) comprend une structure de bâti, comprenant deux parties (2a, 2b) de bâti sensiblement en forme de L, chacune constituée d'une première poutrelle (3a, 3b) et d'une deuxième poutrelle (4a, 4b) reliée à la première poutrelle (3a, 3b) et s'étendant dans une direction perpendiculaire ou au moins sensiblement perpendiculaire à l'étendue longitudinale de la première poutrelle (3a, 3b), dans lequel les premières poutrelles (3a, 3b) des deux parties (2a, 2b) de bâti sont reliées dans l'état d'utilisation, de manière à ce qu'un mouvement relatif de celles-ci soit autorisé seulement dans la direction de leur étendue longitudinale dans l'état d'utilisation, et **en ce que** les deuxièmes poutrelles (4a, 4b) s'étendent parallèlement ou au moins sensiblement parallèlement les unes aux autres dans ledit état, **en ce que** l'une des deuxièmes poutrelles (4a) est pourvue du premier élément (6a) de calage et l'autre deuxième poutrelle (4b) est pourvue du deuxième élément (6b) de calage, et **en ce que** l'agencement (5, 11a, 11b, 11c) peut être commandé pour provoquer un déplacement relatif des premières poutrelles (3a, 3b) dans la direction de leur étendue longitudinale, et par cela rapprocher et éloigner les deuxièmes poutrelles (4a, 4b) et les premiers et deuxièmes éléments (6a, 6b) de calage l'un de l'autre.

7. Dispositif (1) suivant la revendication 4 ou 5 et 6, ***caractérisé* en ce que** l'une des premières poutrelles (3a) a un chambrage à sa face d'extrémité, et **en ce que** l'autre première poutrelle (3b) a une partie d'extrémité configurée pour pénétrer dans le chambrage dans l'état d'utilisation, et **en ce que** le vérin (5) relie les premières poutrelles (3a, 3b) en étant fixé, d'un côté, à la première poutrelle (3a) et en ayant le chambrage dans son chambrage et, de l'autre côté, à la première poutrelle (3b) ayant la partie d'extrémité configurée pour pénétrer dans le chambrage, de manière à pouvoir commander le vérin (5) pour provoquer un mouvement relatif des premières poutrelles (3a, 3b) en déplaçant l'extrémité en saillie davantage vers l'intérieur et vers l'extérieur du chambrage respectivement.

8. Dispositif (1) suivant l'une quelconque des revendications précédentes, ***caractérisé* en ce que** le dispositif (1) comprend en outre un système (14) d'alerte comprenant
• un agencement de réglage configuré de manière commandée pour mettre le système (14) d'alerte dans un mode actif, en envoyant à une unité de processeur au moins une valeur de seuil déterminée à l'avance d'un paramètre associé à la position mutuelle des éléments (6a, 6b) de calage,
• un agencement (17, 19) de capteur configuré pour mesurer une valeur instantanée du paramètre et pour envoyer de l'information sur la valeur instantanée à une unité de processeur,
• une unité de processeur configurée pour recevoir de l'information sur la au moins une valeur de seuil et la valeur instantanée du paramètre et pour, sur la base de cette information, déterminer si la valeur instantanée est d'un côté acceptable de la au moins une valeur de seuil ou ne l'est pas, et
• un agencement (18) de signalisation,
dans lequel l'unité de processeur est configurée pour activer l'agencement (18) de signalisation afin de transmettre un signal d'alerte si la valeur instantanée n'est pas du côté acceptable de la au moins une valeur de seuil du paramètre dans le mode actif.

9. Dispositif (1) suivant la revendication 8, ***caractérisé* en ce que** l'agencement de réglage est configurée pour envoyer deux valeurs de seuil à l'unité de processeur, dans lequel l'une des valeurs de seuil est une valeur de seuil inférieure et l'autre est une valeur de seuil supérieure, et **en ce que** l'unité de processeur est configurée pour activer l'agencement (18) de signalisation, afin de transmettre un signal d'alerte, si la valeur instantanée est en dehors de la plage définie par les valeurs de seuil inférieure et supérieure.

10. Dispositif (1) suivant les revendications 4 et 8 ou 9, ***caractérisé* en ce que** le paramètre associé à la position mutuelle des éléments (6a, 6b) de calage se rapporte à la force avec laquelle les éléments (6a, 6b) de calage sont pressés sur la roue (12) par le vérin (5) d'entraînement.

11. Dispositif (1) suivant les revendications 5 et 10, ***caractérisé* en ce que** le paramètre associé à la position mutuelle des éléments (6a, 6b) de calage se rapporte à la pression d'un fluide hydraulique dans le vérin (5) hydraulique.

12. Dispositif (1) suivant la revendication 11, ***caractérisé* en ce que** l'agencement de réglage est configuré pour envoyer au moins une valeur de seuil inférieure à l'unité de processeur, laquelle valeur de seuil inférieure est de préférence de 30 bar, et **en ce que** l'unité de processeur est configurée pour activer l'agencement (18) de signalisation, si la valeur instantanée est inférieure à cette valeur de seuil inférieure dans le mode actif.

13. Dispositif (1) suivant l'une quelconque des revendications 8 à 12, ***caractérisé* en ce que** l'agencement de réglage comprend un élément (15) amovible de clé, configuré pour être mis en position sur le dispositif (1) dans un mode inactif du système (14) d'alerte, et un moyen configuré pour détecter, si l'élément (15) de clé est mis en position sur le dispositif (1), et **en ce que** l'agencement de réglage est configuré pour mettre le système d'alerte dans un mode actif, lorsqu'il est détecté que l'élément (15) de clé est retiré de sa position sur le dispositif (1), et dans un mode inactif, lorsqu'il est détecté que l'élément (15) de clé est revenu à cette position.

14. Dispositif (1) suivant l'une quelconque des revendications 8 à 13, ***caractérisé* en ce que** l'agencement de signalisation est configuré pour émettre un signal d'alerte comprenant un signal audio.

15. Utilisation du dispositif (1) suivant l'une quelconque des revendications 1 à 14, pour immobiliser un véhicule à roues, tel qu'une automobile, un camion ou un aéroplane.
